# EUROPEAN PATENT APPLICATION

(11) **EP 3 712 831 A1**
(43) Date of publication of application: **23.09.2020**
(21) Application number: 18876062.3
(22) Date of filing: 09.11.2018
(51) Int. Cl.: G06Q 30/02

(54) **LOCAL BOX ADVERTISEMENT SERVICE SYSTEM ENABLING LOCAL BOX OPERATORS TO SHARE BANNER ADVERTISING**

(30) Priority: 13.11.2017 KR 20170150897
(71) Applicant: Altsoft. Inc., Seoul 06097 (KR)
(72) Inventor: KIM, Chan Hong, Seoul 06097 (KR)
(74) Representative: M. Zardi & Co S.A.
(86) International application number: PCT/KR2018/013673
(87) International publication number: WO 2019/093838

(57) **Abstract**

According to a local box advertisement service system proposed in the present invention, which enables local box operators to share banner advertising, banner advertising can be shared between each of local box operators and thus banner advertisements displayed on local boxes of the local box operators can be easily managed, and a banner advertisement can be displayed on a plurality of local boxes through the banner advertising sharing, so that the advertising effect thereof can be increased.

## Description

### Technical Field

The present invention relates to an advertisement service system and, more particularly, to a local box advertisement service system capable of sharing banner advertisements between local box operators.

### Background Art

In general, local advertising is provided in devices such as a kiosk, in addition to mass media such as newspapers, magazines, radio, and TV broadcasts. A kiosk is an unmanned information terminal and is an unmanned comprehensive information guide system that provides information efficiently to a user (consumer) using multimedia. The kiosk may be installed in a specific area to provide preset advertisements while providing information about the area to a user (consumer).

Meanwhile, among methods of providing advertisements, a banner advertisement is one of the most common advertisement methods. As the contents are displayed on the display, bar-shaped advertisements are displayed together in some areas, in which such a bar-shaped advertisement is a banner advertisement. When the user (consumer) sees the advertisement content and clicks on the banner, information associated with the banner is displayed, so that the banner advertisement can naturally provide the user (consumer) with the information which is advertised.

However, in the case of banner advertisement through the kiosk, an advertiser has a difficulty in producing the contents to be displayed for each banner advertisement. In particular, in the case of the banner advertisements through a kiosk, the advertisers should provide banner advertisements separately for each kiosk. Moreover, since the output format is different for each kiosk, there is a problem that the advertiser should individually modify the banner advertisement according to the output format of the kiosk in order to provide the same to the kiosk.

In addition, a kiosk owner also has a difficulty in selecting a plurality of banner advertisements to be displayed in the kiosk to complete contents in the kiosk. Herein, the kiosk owner should be provided with banner advertisements individually through each advertiser. In particular, when the kiosk owner sees a banner advertisement displayed in other kiosk and wants to display the same on his/her kiosk, the kiosk owner should obtain approval from an owner of the other kiosk and an advertiser of the banner advertisement, whereby there is a problem that the procedure is very cumbersome and complicated.

As a prior art related to the technical field, Korean Patent Registration No. 10-1326684, titled "Local Store Marketing Method and System Using Kiosk" has been proposed.

### Disclosure

### Technical Problem

The present invention has been made keeping in mind the above problems occurring in the related art, and an objective of the present invention is to provide a local box advertisement service system capable of sharing banner advertisements between local box operators, by which the banner advertisements are shared between local box operators so that the banner advertisements displayed on the local boxes can be easily managed, and the banner advertisements can be displayed on a plurality of local boxes through sharing of the banner advertisement to improve the advertisement effect.

In addition, another objective of the present invention is to provide a local box advertisement service system capable of sharing banner advertisements between local box operators, by which the banner advertisement having the same output format is shared between local boxes in a platform, so that the advertiser does not need to modify the banner advertisement according to the output format of each local box and the local box operator can conveniently select banner advertisements displayed on the local box.

### Technical Solution

In order to achieve the above object, a local box advertisement service system capable of sharing a banner advertisement between local box operators according to the present invention,
the system providing the banner advertisement to a local box that includes a first local box and a second local box,
the system comprising a service providing server providing a banner advertisement sharing service that allows a banner advertisement displayed on the first local box to be provided to the second local box,
wherein the service providing server includes:
a database module receiving and storing a content to be displayed as the banner advertisement in the local box and a local box code;
when a sharing request event occurs for a share-requested banner advertisement selected among banner advertisements displayed in the first local box by an operator of the second local box, a sharing request receiving module receiving, from the first local box, a sharing request including the share-requested banner and a local box code of the second local box with which the share-requested banner is to be shared;
a search module searching the database module for the share-requested banner advertisement provided to the first local box when the sharing request receiving module receives the sharing request; and
an advertisement providing module providing the share-requested banner advertisement found by the search module from the database module to the second local box according to the local box code received by the sharing request receiving module.

Preferably, the advertisement providing module
may provide a link page for the banner advertisement when selecting a banner advertisement from the local box.

More preferably,
the sharing request event may occur in the link page

Preferably,
the system may further include a sharing request approval module approving the sharing request for the share requested banner advertisement.

Preferably,
the advertisement providing module may indicate whether a banner advertisement provided to the second local box corresponds to the share-requested banner advertisement.

Preferably,
the advertisement providing module may indicate the number of times the share-requested banner advertisement has been shared.

Preferably,
the database module may store a bookmark including one or more banner advertisements selected from the banner advertisements displayed in the first local box.

Preferably,
the share-requested banner advertisement may be selected from the banner advertisements included in the bookmark of the database module.

More preferably,
the bookmark may further include a preset local box code.

Preferably,
the database module may further store a reference location of the banner advertisement independent of a location of an advertiser.

### Advantageous Effects

According to a local box advertisement service system capable of sharing banner advertisements between local box operators proposed in the present invention, the banner advertisements are shared between local box operators so that the banner advertisements displayed on the local boxes can be easily managed, and the banner advertisements can be displayed on a plurality of local boxes through sharing of the banner advertisement to improve the advertisement effect.

In addition, according to a local box advertisement service system capable of sharing banner advertisements between local box operators proposed in the present invention, the banner advertisement having the same output format is shared between local boxes in a platform, so that the advertiser does not need to modify the banner advertisement according to the output format of each local box and the local box operator can conveniently select banner advertisements displayed on the local box.

### Description of Drawings

FIG. 1 is a diagram illustrating a configuration of a local box advertisement service system capable of sharing banner advertisements between local box operators according to an embodiment of the present invention.
FIG. 2 is a diagram illustrating a configuration of a service providing server in a local box advertisement service system capable of sharing banner advertisements between local box operators according to an embodiment of the present invention.
FIG. 3 is a diagram illustrating reference locations set in a local box advertisement service system capable of sharing banner advertisements between local box operators according to an embodiment of the present invention.
FIG. 4 is a diagram illustrating banner advertisements displayed on a local box in a local box advertisement service system capable of sharing banner advertisements between local box operators according to an embodiment of the present invention.
FIG. 5 is a diagram illustrating state in which a banner advertisement is shared from a first local box to a second local box in a local box advertisement service system capable of sharing banner advertisements between local box operators according to an embodiment of the present invention.
FIG. 6 is a diagram illustrating a link page in a local box advertisement service system capable of sharing banner advertisements between local box operators according to an embodiment of the present invention.
FIG. 7 is a diagram illustrating a process of approving a sharing request in a local box advertisement service system capable of sharing banner advertisements between local box operators according to an embodiment of the present invention.
FIG. 8 is a diagram illustrating a state of displaying whether to share the banner advertisement and the number of sharing times thereof in a local box advertisement service system capable of sharing banner advertisement between local box operators according to an embodiment of the present invention.
FIG. 9 is a diagram illustrating a state of selecting a share-requested banner advertisement from a bookmark in a local box advertisement service system capable of sharing banner advertisements between local box operators according to an embodiment of the present invention.

### <Description of Reference Numerals>

- L:: location of local box
- R1:: reference location
- R2:: reference location
- R3:: reference location
- R4:: reference location
- 100:: service providing server
- 110:: database module
- 120:: sharing request receiving module
- 130:: search module
- 140:: advertisement providing module
- 150:: sharing request approval module
- 200:: local box
- 210:: first local box
- 220:: second local box

### Best Mode

Hereinafter, preferred embodiments of the present invention will be described in detail with reference to the accompanying drawings so that those skilled in the art can easily carry out the present invention. In the following detailed description of the preferred embodiments of the present invention, a detailed description of known functions and configurations incorporated herein will be omitted when it may make the subject matter of the present invention unclear. The same reference numerals are used for portions having similar functions and configurations throughout the drawings.

In addition, throughout the specification, when a part is referred to as being "connected" to other part, it includes not only the case that the part is "directly connected" to the other part, but also the case that the part is "indirectly connected" to the other part with another device in between. In addition, "comprising any component" means that other components may be further included, rather than excluding other components, unless specifically stated otherwise.

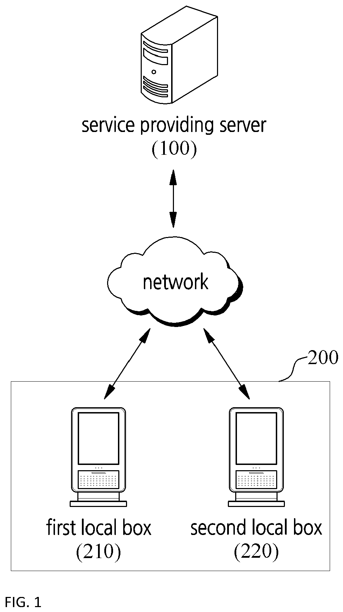

FIG. 1 is a diagram illustrating a configuration of a local box advertisement service system capable of sharing banner advertisements between local box operators according to an embodiment of the present invention. As shown in FIG. 1, the local box advertisement service system capable of sharing banner advertisements between local box operators according to an embodiment of the present invention may include a service providing server 100, and may further include a first local box 210 and a second local box 220, as a local box advertisement service system that provides banner advertisements to a local box 200 including the first local box 210 and the second local box 220.

The service providing server 100 may provide a banner advertisement to the local box 200 including the first local box 210 and the second local box 220. Here, that the service providing server 100 provides the banner advertisement to the local box 200 means transmitting data about the banner advertisement to be displayed on the local box 200 to the local box 200 through a network. In addition, the service providing server 100 may provide a banner advertisement sharing service by which a banner advertisement displayed in the first local box 210 is provided to the second local box 220. Herein, sharing the banner advertisement means providing the banner advertisement displayed on the first local box 210 to the second local box 220.

The local box 200 may send a banner advertisement request to the service providing server 100. Here, the local box 200 may transmit/receive data with the service providing server 100 through a network. Therefore, the local box 200 may receive the data about banner advertisement from the service providing server 100 to output the banner advertisement. Meanwhile, any object capable of transmitting and receiving data with the service providing server 100 through a network to output a banner advertisement may be included in the local box 200 regardless of its specific type.

Meanwhile, according to an embodiment, the local box 200 may be a virtual local box that is implemented electronically. When a selection event occurs, the virtual local box may output a banner advertisement included in the virtual local box. Herein, the selection event may be a click in the case of a PC or a touch event in the case of a mobile device, according to a device to which a virtual local box is output. That is, the selection event is an event generated when a user (consumer) selects a specific virtual local box.

The local box 200 may include a first local box 210 and a second local box 220. Herein, the first local box 210 and the second local box 220 may be operated separately by different local box operators from each other. Accordingly, the first local box 210 and the second local box 220 may receive and display banner advertisements from the service providing server 100. Hereinafter, the term "local box 200" may be referred to as a concept including the first local box 210 and the second local box 220. In addition, the second local box 220 may be referred to as a concept including all of the local boxes that may share banner advertisements from the first local box 210.

The advertiser device (not shown) is a device capable of transmitting and receiving data with the service providing server 100 through a network, and may provide information about a banner advertisement to the service providing server 100. That is, the service providing server 100 may receive and store information on the banner advertisement from the advertiser device. Herein, the information on the banner advertisement may include a content to be displayed as a banner advertisement and a reference location of the banner advertisement, which will be described below.

Meanwhile, the network in the present invention may be a wired network such as a local area network (LAN), a wide area network (WAN), or a value added network (VAN), or all kinds of wireless networks such as a mobile radio communication network, a satellite communication network, a wireless broadband internet (WIBRO), a high speed downlink packet access (HSDPA), and the like.

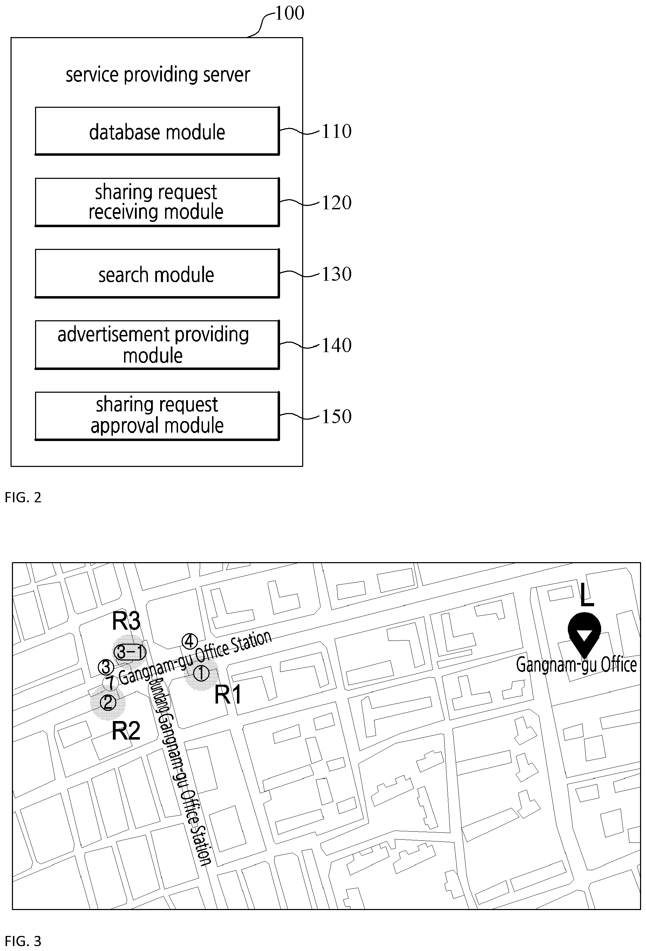

FIG. 2 is a diagram illustrating a configuration of a service providing server in a local box advertisement service system capable of sharing banner advertisements between local box operators according to an embodiment of the present invention. As shown in FIG. 2, the service providing server 100 includes a database module 110, a sharing request receiving module 120, a search module 130, and an advertisement providing module 140, and further includes a sharing request approval module 150. Hereinafter, a configuration of the service providing server 100 in the local box advertisement service system capable of sharing banner advertisements between local box operators according to an embodiment of the present invention will be described in detail.

The database module 110 may receive and store the content to be displayed on the local box 200 as the banner advertisement and the local box code, and further store the reference location of the banner advertisement independent of the advertiser's location and the location of the local box according to an embodiment. More specifically, the database module 110 may serve to store content to be displayed as a banner advertisement input from the advertiser device. Herein, the content may be data including text, images, sound, and video. The local box code is a code uniquely assigned to each local box 200 to be used to distinguish each local box. According to an embodiment, the local box code may be a code generated arbitrarily by a user. Therefore, the service providing server 100 may specify the local box 200 through the local box code and provide the banner advertisement to the specified local box 200. The location of the local box will be described later. Meanwhile, the reference location may be used to set the priority of the banner advertisement in the priority setting module to be described later. Since the banner advertisement has the highest priority in the reference location, the reference location corresponds to the location where the banner advertisement is most exposed to users (consumers). This reference location may be set via the advertiser device and is independent of the physical location of the advertiser. That is, even when the advertiser is positioned in 'A', the reference location of the banner advertisement may be set to 'B'.

Meanwhile, the database module 110 may receive and store a plurality of reference locations for one banner advertisement. Since the reference location of the banner advertisement may be set independently in a plurality of locations regardless of the physical location of the advertiser, the banner advertisement may be more effectively exposed to users (consumers) through the plurality of reference locations.

A priority setting module (not shown) may set the priority according to the distance between the location of the local box 200 stored in the database module 110 and the reference location of the banner advertisement included in the local box 200. More specifically, the priority setting module may set the priority in an order that the reference location of the banner advertisement stored in the database module 110 is close to the location of the local box 200. Meanwhile, the location of the local box 200 includes a location where the local box 200 is installed in order to adjust the priority between banner advertisements having the same reference location. However, the location of the local box 200 may be not the location where the local box 200 is installed, but any location within a predetermined range. Herein, the predetermined range may be set in various ways.

The advertisement providing module 140 may arrange banner advertisements stored in the database module 110 and provide the banner advertisements to the local box 200 according to the priority set in the priority setting module. That is, the advertisement providing module 140 may transmit data for the banner advertisements having the set priority to the local box 200 through the network. The local box 200 outputs the data on the banner advertisements having the set priority, which is received from the advertisement providing module 140, so that the banner advertisements may be exposed to users (consumers) according to the priority.

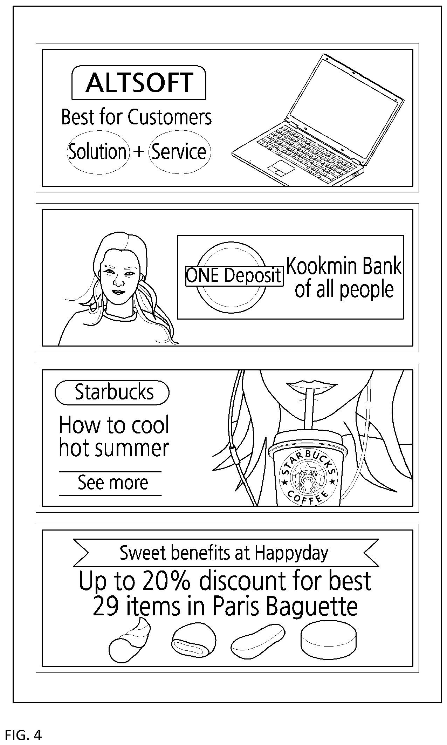

FIG. 3 is a diagram illustrating reference locations set in a local box advertisement service system capable of sharing banner advertisements between local box operators according to an embodiment of the present invention, and FIG. 4 is a diagram illustrating banner advertisements displayed on a local box 200 in a local box advertisement service system capable of sharing banner advertisements between local box operators according to an embodiment of the present invention. As shown in FIG. 3, it is assumed that a location L of the local box 200 is "Gangnam-gu Office". Herein, it is assumed that the database module 110 stores a banner advertisement of "ALTOSOFT" with "Gangnam-gu Office Station Exit 1" set to the reference location R1, banner advertisements of "Starbucks" and "Paris Baguette" with "Gangnam-gu Office Station Exit 2" set to the reference location R2, and a banner advertisement of "Kookmin Bank" with "Gangnam-gu Office Station Exit 3-1" set to the reference location R3. The priority setting module then sets the priority according to the distance between the "Gangnam-gu Office" and the reference locations R1, R2, and R3 specified by the location (L) information of the local box 200 for each banner advertisement. Referring to FIG. 3, since the reference location R1 is closest to the "Gangnam-gu Office", the "ALTSOFT" banner advertisement set to the reference location R1 has the highest priority. Since the distance to the reference location R3 is close in a next order, the banner advertisement of "Kookmin Bank" set to the reference location R3 has the next priority. Finally, because the distance to the reference location R2 is farthest, the banner advertisement of "Starbucks" and the banner advertisement of "Paris Baguette" set to the reference location R2 have the last priority. In summary, the priority setting module sets the priority of the banner advertisements having the reference locations in an order of the reference locations R1, R3, and R2. The advertisement providing module 140 arranges the advertisement banners according to the priority set in the priority setting module, and therefore the order of the advertisement banners displayed on the local box 200 is as shown in FIG. 4. Accordingly, in the local box advertisement service system capable of sharing banner advertisements between local box operators according to an embodiment of the present invention, the priority is given to banner advertisements on the basis of a relative distance from a reference location, so that the local box 200 does not need to determine the placement order of the banner advertisements. In addition, when the advertisement banner is added, the priority is set according to the reference location of the advertisement banner, whereby it is not necessary to update the placement order periodically.

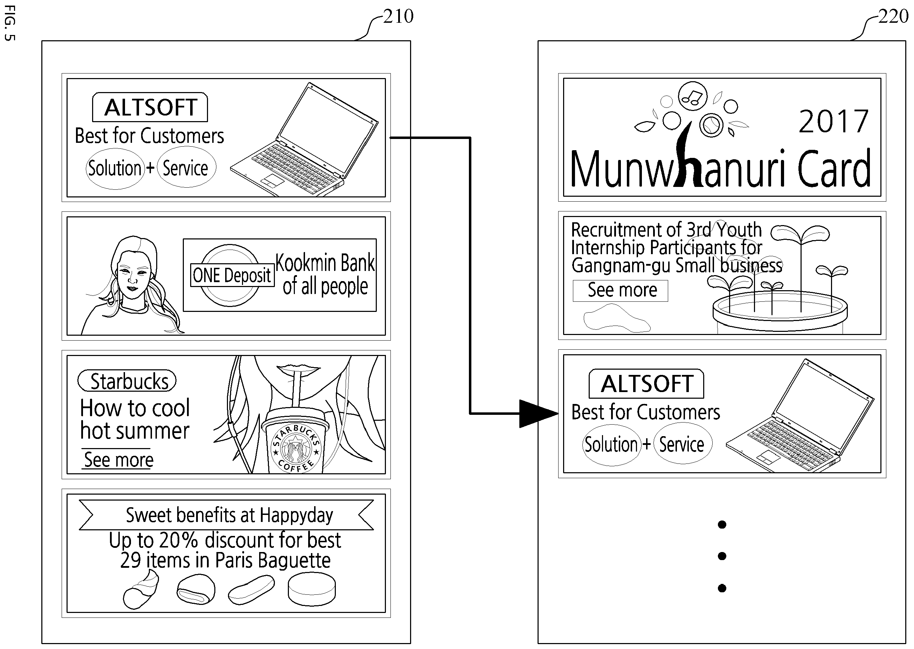

FIG. 5 is a diagram illustrating state in which a banner advertisement is shared from a first local box 210 to a second local box 220 in a local box advertisement service system capable of sharing banner advertisements between local box operators according to an embodiment of the present invention. When a sharing request event occurs for a banner advertisement selected from banner advertisements displayed in the first local box 210, the sharing request receiving module 120 may receive, from the first local box 210, a sharing request including a share-requested banner advertisement and a local box code of the second local box 220 with which the share-requested banner is to be shared. Herein, the share-requested banner advertisement means a banner advertisement selected by an operator of the second local box 220 among the banner advertisements displayed on the first local box 210 to share the same with the second local box 220. That is, when the second local box operator selects the share-requested banner from the first local box 210 and enters the local box code of the second local box 220, the sharing request receiving module 120 may receive the share-requested banner advertisement and the local box code of the second local box 220 from the first local box 210. Herein, the local box code may be used to specify the local box 200, that is, the second local box 220, to share the share-requested banner advertisement.

When the sharing request receiving module 120 receives a sharing request, the search module 130 may search for the share-requested banner advertisement that is provided by the database module 110 to the first local box 210. This is because the banner advertisement displayed in the first local box 210 is a banner advertisement stored in the database module 110 of the service providing server 100. The search module 130 searches the database module 110 for the share-requested banner advertisement shared between the local boxes 200, so that the share-requested banner advertisement is managed centrally by the database module 110 without being stored separately in each of the first local box 210 and the second local box 220.

The advertisement providing module 140 may provide the second local box 220 with the share-requested banner advertisement found by the search module 130 in the database module 110 according to the local box code received by the sharing request receiving module 120. The advertisement providing module 140 transmits data for the share-requested banner advertisement found by the search module 130 to the first local box 210 and the second local box 220, so that the share-requested banner advertisement may be displayed in both the first local box 210 and the second local box 220. Accordingly, as shown in FIG. 5, the share-requested banner advertisement may be shared from the first local box 210 to the second local box 220 specified by the local box code, and the share-requested banner may be displayed in both the first local box 210 and the second local box 220.

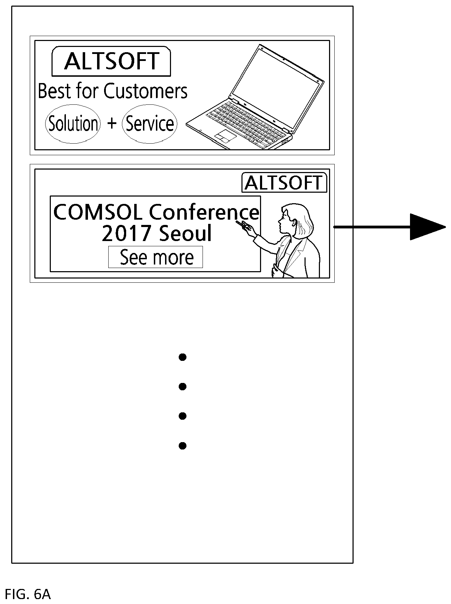

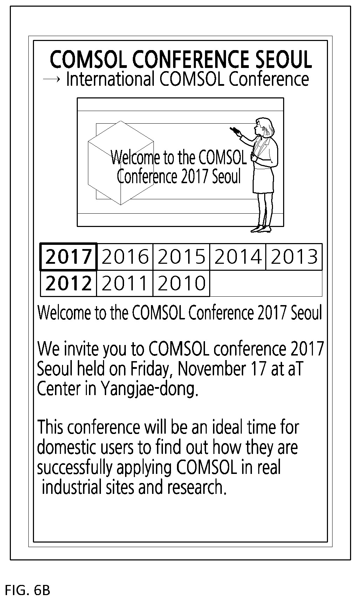

FIG. 6 is a diagram illustrating a link page in a local box advertisement service system capable of sharing banner advertisements between local box operators according to an embodiment of the present invention. As shown in FIG. 6, the advertisement providing module 140 may provide a link page for the banner advertisement when the banner advertisement is selected in the local box 200. Herein, the link page may include detailed content of the banner advertisement. The link page may be stored in the database module 110 or linked to a separate webpage. In addition, the link page may be provided as a separate window to include various detailed contents that may be appealed to users (consumers). Accordingly, when the user (consumer) selects the banner advertisement from the local box 200, the advertisement providing module 140 may provide detailed information about the banner advertisement to the user (consumer).

Meanwhile, the sharing request event may occur in the link page. Alternatively, in some embodiments, the sharing request event may be generated by an event of selecting a share button displayed on the banner advertisement. Preferably, the share button may be inserted in the link page. However, the sharing request event is not limited to the above-described embodiment, as long as it is an event capable of generating a sharing request to share the banner advertisement.

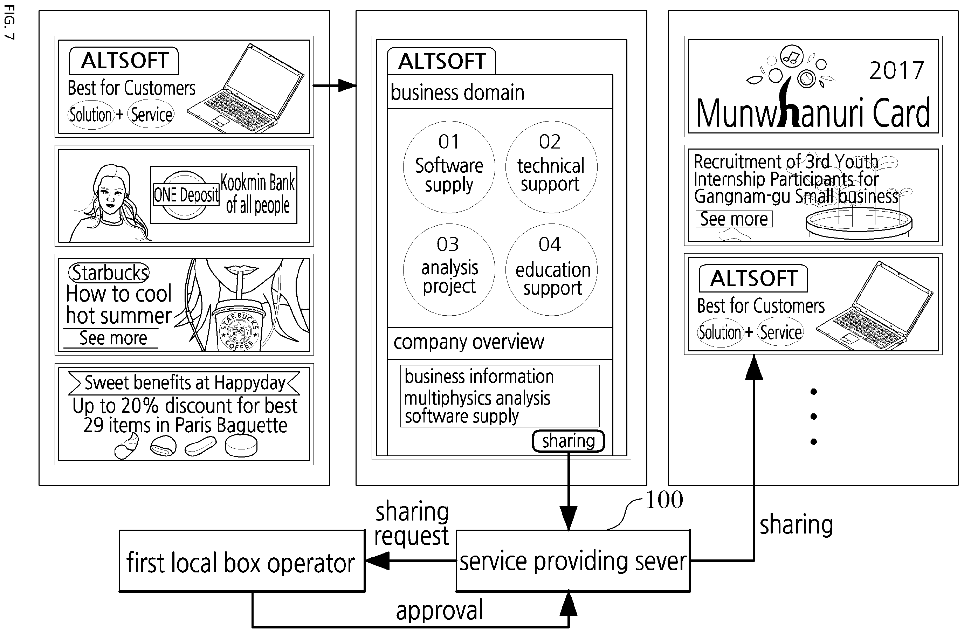

FIG. 7 is a diagram illustrating a process of approving a sharing request in a local box advertisement service system capable of sharing banner advertisements between local box operators according to an embodiment of the present invention. Referring to FIG. 7, the sharing request approval module 150 may approve a sharing request for a share-requested banner advertisement. When the operator of the second local box 220 makes a request to share the banner advertisement displayed on the first local box 210, the operator may be required to permit sharing the banner advertisement. This is to prevent the third party from sharing the banner advertisement without permission according to content of the banner advertisement. When the sharing request receiving module 120 receives the sharing request, the sharing request approval module 150 may obtain approval from the operator of the first local box 210 to determine whether to approve or reject the corresponding sharing request.

When the sharing request approval module 150 approves the sharing request, the share-requested banner advertisement is shared from the first local box 210 to the second local box 220 via the search module 130 and the advertisement providing module 140. However, when the sharing request approval module 150 rejects the sharing request, the share-requested banner advertisement is not shared from the first local box 210 to the second local box 220.

According to an embodiment, the sharing request approval module 150 may determine whether to approve or reject the sharing request, in such a manner that the operator of the first local box 210 asks whether to approve a sharing request for the share-requested banner advertisement and receives a response thereto when connecting to the service connection server. Herein, since the sharing request receiving module 120 may receive the share-requested banner advertisement and the local box code of the second local box 220 from the first local box 210, the operator of the first local box 210 may check information on the second local box 220 and determine whether to approve the sharing request. Therefore, when the operator of the first local box 210 operator does not want to share the shared request banner advertisement, the shared request banner advertisement may not be shared.

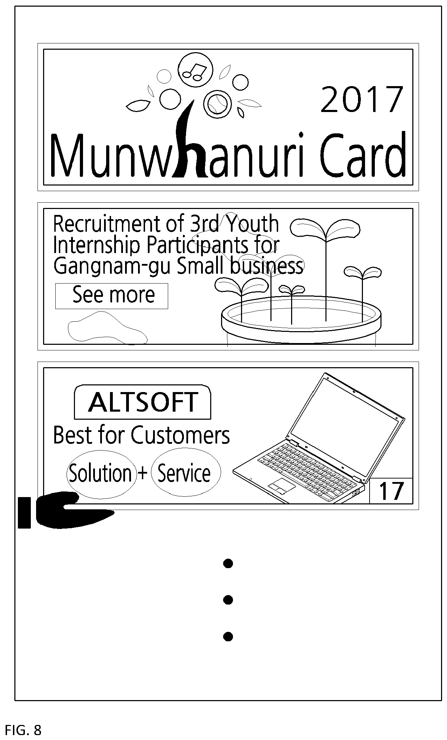

FIG. 8 is a diagram illustrating a state of displaying whether to share the banner advertisement and the number of sharing times thereof in a local box advertisement service system capable of sharing banner advertisement between local box operators according to an embodiment of the present invention. As shown in FIG. 8, the advertisement providing module 140 may indicate whether a banner advertisement provided to the second local box 220 corresponds to a share-requested banner advertisement. That is, when the share-requested banner advertisement is shared, the advertisement providing module 140 provides the banner advertisements stored in the database module 110 to the first local box 210, and provides the shared banner advertisement to the second local box 220 with which the banner advertisement is shared. Therefore, the user (consumer) may check that the share-requested banner advertisement displayed on the second local box 220 is a shared banner advertisement. In addition, by displaying that the banner advertisement is the share-requested banner advertisement, that is, a shared banner advertisement and by displaying the number of sharing times, it is possible to improve the advertisement effect for the banner advertisement. This is because the higher the number of sharing times of banner advertisements, the more the user (consumer) may be interested.

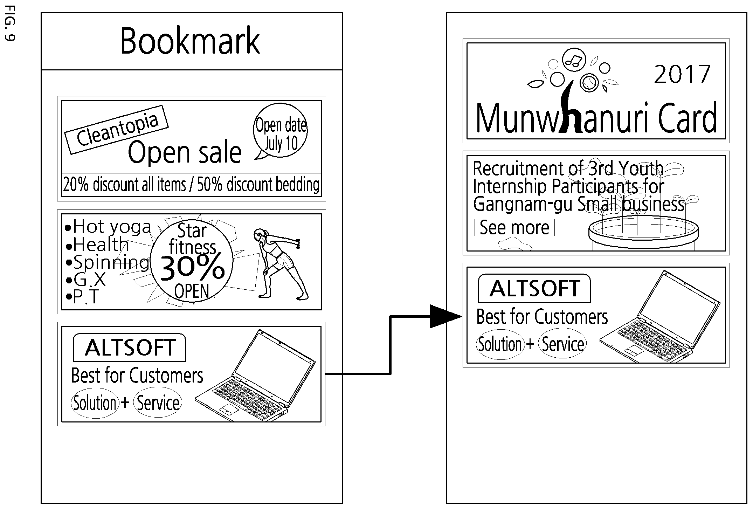

FIG. 9 is a diagram illustrating a state of selecting a share-requested banner advertisement from a bookmark in a local box advertisement service system capable of sharing banner advertisements between local box operators according to an embodiment of the present invention. As illustrated in FIG. 9, the database module 110 may store a bookmark including at least one banner advertisement selected from banner advertisements displayed on the first local box 210. When the operator of the second local box 220 has a favorite banner advertisement among the banner advertisements displayed on the first local box 210, he/she may separately store the corresponding banner advertisement without making a request for the same immediately. Herein, the database module 110 stores the corresponding banner advertisement in the bookmark, so that the operator of the second local box 220 may check the banner advertisement again at any time through the bookmark of the database module 110

Herein, the share-requested banner advertisement may be selected from the banner advertisements included in the bookmark of the database module 110. That is, the operator of the second local box 220 may select one banner advertisement among the banner advertisements included in the bookmark of the database module 110 and thus make a request to share the banner advertisement. Accordingly, the operator of the second local box 220 may easily select the banner advertisement to be shared with the second local box 220 among the banner advertisements included in the bookmark, thereby comparing a plurality of banner advertisements included in the bookmark from each other.

Herein, the bookmark may further include a preset local box code. Therefore, when a request is made to share a banner advertisement included in the bookmark, the sharing request may be generated through a local box code included in the bookmark without having to input a local box code separately. Herein, the preset local box code may be modified by the second local box operator at any time.

As described above, according to a local box advertisement service system capable of sharing banner advertisements between local box operators proposed in the present invention, the banner advertisements are shared between local box operators so that the banner advertisements displayed on the local boxes can be easily managed, and the banner advertisements can be displayed on a plurality of local boxes through sharing of the banner advertisement to improve the advertisement effect. In addition, according to a local box advertisement service system capable of sharing banner advertisements between local box operators proposed in the present invention, the banner advertisement having the same output format is shared between local boxes in a platform, so that the advertiser does not need to modify the banner advertisement according to the output format of each local box and the local box operator can conveniently select banner advertisements displayed on the local box.

The present invention described above may be variously modified or applied by those skilled in the art, and the scope of the technical idea according to the present invention will be defined by the claims below.

## Claims

1. A local box advertisement service system capable of sharing a banner advertisement between local box operators, the system providing the banner advertisement to a local box that includes a first local box and a second local box, the system comprising a service providing server providing a banner advertisement sharing service that allows a banner advertisement displayed on the first local box to be provided to the second local box,
wherein the service providing server includes:
a database module receiving and storing a content to be displayed as the banner advertisement in the local box and a local box code;
when a sharing request event occurs for a share-requested banner advertisement selected among banner advertisements displayed in the first local box by an operator of the second local box, a sharing request receiving module receiving, from the first local box, a sharing request including the share-requested banner and a local box code of the second local box with which the share-requested banner is to be shared;
a search module searching the database module for the share-requested banner advertisement provided to the first local box when the sharing request receiving module receives the sharing request;
an advertisement providing module providing the share-requested banner advertisement found by the search module from the database module to the second local box according to the local box code received by the sharing request receiving module; and
a sharing request approval module approving the sharing request for the shared-requested banner advertisement by obtaining approval from an operator of the first local box.

2. The system of claim 1, wherein the advertisement providing module provides a link page for the banner advertisement when selecting a banner advertisement from the local box.

3. The system of claim 2, wherein the sharing request event occurs in the link page

4. The system of claim 1, wherein the advertisement providing module indicates whether a banner advertisement provided to the second local box corresponds to the share-requested banner advertisement.

5. The system of claim 4, wherein the advertisement providing module indicates the number of times the share-requested banner advertisement has been shared.

6. The system of claim 1, wherein the database module stores a bookmark including one or more banner advertisements selected from the banner advertisements displayed in the first local box.

7. The system of claim 6, wherein the share-requested banner advertisement is selected from the banner advertisements included in the bookmark of the database module.

8. The system of claim 7, wherein the bookmark further includes a preset local box code.

9. The system of claim 1, wherein the database module further stores a reference location of the banner advertisement independent of a location of an advertiser.
